# EUROPEAN PATENT APPLICATION

(11) **EP 3 770 099 A1**
(43) Date of publication of application: **27.01.2021**
(21) Application number: 19187960.0
(22) Date of filing: 23.07.2019
(51) Int. Cl.: B66B 13/14, H02P 31/00

(54) **ELEVATOR DOOR DRIVE CONFIGURED TO PRODUCE AN ACOUSTICAL FEEDBACK SIGNAL**

(71) Applicant: Otis Elevator Company, Farmington, Connecticut 06032 (US)
(72) Inventor: HORBRÜGGER, Herbert, 13507 Berlin (DE); LÖB, Rüdiger, 13507 Berlin (DE)
(74) Representative: Dehns

(57) **Abstract**

An elevator door drive (10) comprising: an elevator door motor (15); and an elevator door controller (20) comprising at least one button (21); wherein the elevator door controller (20) is arranged to generate a Pulse Width Modulation (PWM) drive signal for driving the elevator door motor (15); wherein the elevator door controller (20) is arranged to provide an acoustic frequency PWM signal (32) to the elevator door motor (15) responsive to a press of the at least one button (21). When the elevator door motor (15) is provided with a PWM signal in the acoustic range, the current passing through the motor windings generates forces that result from that current and the magnetic fields in the motor. These forces excite vibrations in the motor components that generate audible noise (which may be referred to as audible magnetic noise or electromagnetic acoustic noise). The deliberate provision of an acoustic frequency PWM signal (32) to the elevator door motor (15) is used here to generate audible magnetic noise in the motor intentionally, in order to provide a feedback mechanism to the user. Thus the motor is essentially being used as a loudspeaker to communicate information (42) to the user.

## Description

### Technical Field

The present disclosure relates to elevator door drive systems, in particular to the initialisation process of learning the size of the door opening.

### Background

When an elevator system is installed, the car needs to be configured so that it knows the size of the door openings in the hoistway. Both the car doors and the hoistway doors are generally opened by a door drive motor located on the elevator car (usually on top of the car). The door drive motor is controlled by a door controller. During initialisation, the door controller can perform a learn run in which it controls the door drive motor to drive the doors between an open configuration and a closed configuration. During this process, the door controller detects the fully open and fully closed positions of the doors and thereby determines the width of the door opening for the particular installation. Thus the same door controller can be used for many different sized elevators with different sized doors as it can simply perform a learn run to determine the size of door opening to be used in future operations.

In order to minimise the size and cost of the door controller, the controller generally makes use of surface mount devices (SMD). SMD parts are small and inexpensive. However, in the case of an elevator door controller, a button is required for initiation of the learn run. SMD buttons are small and often do not provide haptic feedback to the user, particularly the smallest least expensive buttons.

### Summary

According to a first aspect of the present disclosure there is provided an elevator door drive comprising:
an elevator door motor; and
an elevator door controller comprising at least one button;
wherein the elevator door controller is arranged to generate a Pulse Width Modulation (PWM) drive signal for driving the elevator door motor;
wherein the elevator door controller is arranged to provide an acoustic frequency PWM signal to the elevator door motor responsive to a press of the at least one button.

When the elevator door motor is provided with a PWM signal in the acoustic range, the current passing through the motor windings generates forces that result from that current and the magnetic fields in the motor. These forces excite vibrations in the motor components that generate audible noise (which may be referred to as audible magnetic noise or electromagnetic acoustic noise). This is normally undesirable as it is generally desired to operate motors as quietly as possible. For this reason, it is normal practice to drive elevator door motors with a non-acoustic PWM signal, e.g. with a high enough switching frequency that no noise is generated. Typically the PWM switching frequency for the door motor is therefore in the region of 10 kHz to 20 kHz. The actual drive signal frequency for the motor (i.e. the averaged output of the PWM signal) typically has a frequency of no more than 10 Hz and therefore also generates no audible noise as it is below the normal hearing range. To explain this further, DC motors are typically used for a door drive, and thus the averaged PWM provides the DC voltage for the motor. The shortest door closing time is typically about 1 second, i.e. the maximum door cycle frequency is about 1 Hz. For sufficient torque control the current control loop, that directly sets the door drive output voltage, typically reacts about 10 times faster. So the maximum frequency of the door drive output voltage is typically no more than 10 Hz. This frequency content will not generate acoustic noise.

Thus in a traditional door drive signal, the PWM signal has a switching frequency of greater than 10 kHz (and thus above the audible range) and represents a door drive signal with a frequency of no more than 10 Hz (and thus below the audible range). In the system according to this disclosure, an additional acoustic frequency PWM signal is provided at an audible frequency. It will be appreciated that the PWM signal is still delivered to the motor at the PWM switching frequency (e.g. 10 kHz - 20 kHz), but represents a signal in the audible frequency range (e.g. 20 - 5000 Hz). It will also be appreciated that the PWM motor drive signal and the acoustic frequency PWM signal may be provided separately to the motor or may be combined and sent as components of a single signal. Equally the PWM drive signal and the acoustic frequency PWM signal may be generated by sending a non-PWM drive signal and a non-PWM acoustic frequency signal to a PWM generator which generates the corresponding PWM signals (at a switching frequency of e.g. 10 kHz - 20 kHz) either as separate signals or components of a single combined signal.

The deliberate provision of an acoustic frequency PWM signal to the elevator door motor is used here to generate audible magnetic noise in the motor intentionally, in order to provide a feedback mechanism to the user. Thus the motor is essentially being used as a loudspeaker to communicate information to the user. This addresses the particular problem of the lack of haptic feedback from SMD buttons, by providing acoustic feedback instead of haptic feedback. This has a number of significant advantages. For example the elevator door controller can still use SMD components, thus keeping the size and cost benefits of those components. Additionally, as no change to the components (i.e. the hardware) is required, existing elevator door controllers can be upgraded easily by upgrading the software. There is no need to install a different switch or to install a loudspeaker as the upgraded system uses existing drive components to generate the audible feedback signal.

The lack of haptic feedback in elevator door controllers with SMD buttons has been found to be particularly problematic. When a button on the door controller is pressed, the user (i.e. installer or maintenance technician) will normally expect some action to occur. For example in the case of pressing a learn run button, the elevator doors should begin to move so as to calibrate the elevator doors to the correct opening size. If the elevator doors do indeed start to move then there is no problem. However, in certain circumstances the elevator doors will not move, e.g. because of a fault in the system. One moderately regular occurrence is that the door learn run cannot be performed if the Top of Car Inspection (TCI) switch is not in the "Inspection mode" position. This is easily resolved simply by putting the TCI switch into the correct position. However, with the lack of haptic feedback from the learn run button, the user often thinks that they simply did not press the button, or did not press it hard enough. The user then continues trying to press the button (leading to wasted time) or tries to push the button excessively hard which can damage the button, incurring wasted cost and unwanted downtime of the elevator.

According to this disclosure, the elevator door drive can intentionally generate audible feedback via the motor to provide information to the user about the functioning of the elevator door drive. The elevator door controller can generate an acoustic frequency PWM signal to cause the door motor to generate audible magnetic noise in certain circumstances. For example, the acoustic frequency PWM signal could be generated every time the button is used so as to provide a confirmation to the user that the button was pressed. However, validation of button press is also provided in normal operation simply by the elevator car doors beginning to move. Therefore, it is preferred that the acoustic frequency PWM signal is used to indicate a problem, thus providing more useful feedback information to the user. Thus the elevator door controller may be arranged to provide the acoustic frequency PWM signal in the case of an error (and indeed it may be arranged to provide the acoustic frequency PWM signal only in the case of an error). The acoustic frequency PWM signal may for example be generated when the button is pressed and when the elevator car is not in inspection mode (e.g. the TCI switch is not in the inspection mode position). This provides clear and identifiable feedback to the user that something is wrong with the system, but that the button was properly activated. Thus the user will not continue pressing the button, wasting time or risking damage to the button, but can instead troubleshoot the problem, thereby allowing more efficient maintenance to be carried out with less risk of component damage.

The acoustic frequency PWM signal is generated such that it cannot drive the door motor as its frequency (the effective frequency output by the PWM module due to the acoustic PWM signal) is much higher than the movement frequency range of the motor (by comparison the output of the PWM module that is due to the PWM drive signal has an effective frequency of typically no more than 10 Hz). Thus the acoustic frequency PWM signal will not induce any door movement. Additionally the power content of the acoustic part of the signal is very small compared with the drive part of the signal and therefore is also incapable of inducing door movement on account of its low power.

While the human auditory range is typically from about 20 Hz to about 20 kHz, the ear is less sensitive at the extremes of this range. For example a low amplitude vibration above 10 kHz may not be audible in a normal environment even though it might be audible in a laboratory. Therefore the frequency boundary between audible magnetic noise and inaudible magnetic noise may be lower than the theoretic upper hearing frequency limit. The same applies at the lower frequency end of the range, i.e. the frequency boundary between audible and inaudible noise may be higher than the theoretic lower hearing frequency limit. Nevertheless, as the drive signals (for actually driving the door) are preferably designed to be inaudible, while the acoustic frequency PWM signal is designed to be audible, in some examples the acoustic frequency PWM signal is of higher frequency than the PWM drive signal (the frequencies here referring to the waveforms as seen by the motor, i.e. not the PWM switching frequency).

The acoustic frequency PWM signal may comprise a frequency of no more than 10 kHz, optionally no more than 5 kHz, optionally no more than 3 kHz, optionally no more than 1500 Hz, optionally no more than 1000 Hz. The human ear is most sensitive to sounds in the range of about 1 kHz to 5 kHz, but lower frequencies may be preferred to make a more pleasant feedback noise to the user.

If the frequency is too low, then the audible magnetic noise may again be difficult to hear either because it is below the most sensitive range of hearing or because it may be masked by other low frequency noises. Therefore in some preferred examples the acoustic frequency PWM signal comprises a frequency of at least 200 Hz.

Meanwhile, the PWM drive signal may comprise a frequency lower than 20 Hz, optionally lower than 10 Hz. Such PWM drive frequencies will typically not create any significant audible magnetic noise (i.e. they are non-acoustic signals) and thus will allow quiet operation of the elevator doors in normal use without audible intrusion on passengers.

In some examples the acoustic frequency PWM signal has a power of no more than 10 Watts, optionally no more than 5 Watts, optionally no more than 2 Watts. By contrast, the PWM drive signal may have a power of around 100 - 200 Watts. Thus the acoustic frequency PWM signal does not provide enough power to drive the motor and cause unwanted movements of the motor.

The acoustic frequency PWM signal may consist of a single frequency, i.e. a pure tone. However, it may be desirable that the acoustic frequency PWM signal comprises a plurality of acoustic frequencies. For example if there is a risk that one frequency may clash with another common frequency such that it would be difficult to hear or difficult to distinguish, then the use of a plurality of frequencies could still provide a distinct feedback noise. In some examples the acoustic frequency PWM signal may comprise several frequencies across a range of acoustic frequencies.

In some examples the acoustic frequency PWM signal may comprise synthesised speech. Such acoustic frequency PWM signals would comprise a range of frequencies at a variety of amplitudes and would also be time-varying signals such that the audible noise generated by the motor resembles speech and can thereby convey a more detailed message regarding the particular situation. For example, in the case where the TCI switch is not in the inspection mode position, the acoustic frequency PWM signal could be designed to generate the message "No TCI" so that the user can readily rectify the problem and proceed with maintenance. Other messages are of course possible to provide information on other possible states (e.g. errors) of the system.

While the button on the elevator door controller could be any type of button (including those with haptic feedback), in some examples the at least one button may be a surface mount device button. As discussed above, such SMD buttons are inexpensive and small, thus minimising the cost and size of the elevator door drive. In some examples the at least one button provides no haptic feedback upon being pressed. The button could be any button of an elevator door controller. However, in some examples the at least one button comprises a door learn run button. The door learn run button has been found to suffer particularly from the problems described above, i.e. lack of feedback and possible damage to the button.

The elevator door controller may be arranged to provide at least two different acoustic frequency PWM signals to the elevator door motor, the at least two different acoustic frequency PWM signals indicating different system states. For example, there may be a number of different possible errors with the system and it would be particularly convenient to provide further information to the user as to what the particular problem might be. For example, different acoustic frequency PWM signals could be used to distinguish between the TCI switch being in the wrong position, the elevator car door being locked, the hoistway door being locked, or another element of the safety chain having a problem. A different acoustic frequency PWM signal could of course also be used to indicate a positive state such as that the system is fully operational (although as discussed above this is normally discernible as the elevator doors will start to move). Different acoustic frequency PWM signals could include signals of different lengths (e.g. a short signal for one state and a long signal for another state), signals of different frequency (e.g. a low tone for one state and a high tone for another state), different numbers of repetitions of a signal, e.g. one signal (e.g. one beep) for a first state, two signals (e.g. two beeps) for a second state, etc. In the case of speech synthesis of course different messages could be used corresponding to different states.

According to a second aspect of the present disclosure there is provided a method of operating an elevator door drive, comprising:
responsive to a press of at least one button on an elevator door controller, generating an acoustic frequency PWM signal and providing said acoustic frequency PWM signal to an elevator door motor.

According to a third aspect of the present disclosure there is provided a method of upgrading an elevator door drive, comprising:
upgrading the software in an elevator door controller of the elevator door drive such that the elevator door controller is arranged to provide an acoustic frequency PWM signal to the elevator door motor responsive to a press of at least one button on the elevator door controller.

It will be appreciated that all of the optional features described above in relation to the first aspect may also optionally be applied to either of the second and third aspects.

### Detailed Description

Certain examples of the present disclosure will now be described, by way of example only, with reference to the accompanying drawings in which:
Fig. 1 shows components of an elevator door drive;
Fig. 2 illustrates an example of an acoustic PWM signal and its effect.

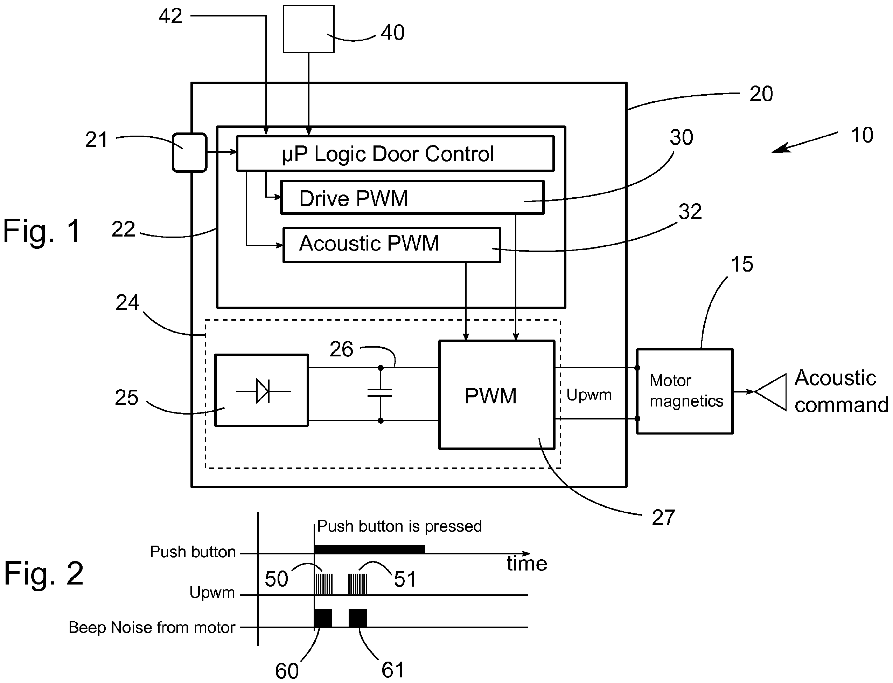

Fig. 1 shows an elevator door drive 10 which is used to control the elevator car doors and hoistway doors (not shown) during normal elevator use. The elevator door drive 10 has an elevator door motor 15 and an elevator door controller 20. The elevator door controller 20 includes at least one button 21, in this case a learn run button 21 that is used to signal to the elevator door controller 20 that it should perform a learn run operation to calibrate the elevator door drive 10 for the door opening size. The learn run button 21 is an SMD button that provides no haptic feedback to the user upon being pressed which can make it difficult to tell whether or not it was pressed successfully.

The elevator door controller 20 has a microprocessor 22 which is programmed with software to control the door opening and closing, including performing a learn run when required. The elevator door controller 20 also has a motor controller 24 which includes a converter 25 to convert an AC power supply to a DC voltage on a DC-link 26 and a PWM module 27 to convert the DC voltage from the DC-link 26 to a PWM signal for the elevator door motor 15.

The PWM module 27 is driven by signals from the microprocessor 22 (generated by the software running on it). The microprocessor 22 can generate a PWM drive signal 30 for motion control of the elevator door motor 15 and an acoustic frequency PWM signal 32.

If the elevator system is functioning properly then the microprocessor 22 generates a PWM motor drive signal 30 that drives the elevator door motor 15 so as to operate the doors in the opening and/or closing direction as appropriate (either during normal use or as part of a learn run). The PWM motor drive signal 30 controls the speed of the elevator door motor 15 and thus controls the position of the doors.

When the learn run button 21 is pressed, the microprocessor 22 attempts to perform a learn run, including controlling the elevator door motor 15 to move the doors so as to determine the width of the door opening. Before doing so, the microprocessor 22 checks the status of the top of car inspection (TCI) switch 40. A learn run can only be performed if the TCI switch 40 is in the inspection mode position. This enables certain safety features of the elevator system that protect the maintenance worker during maintenance procedures. Additionally, the microprocessor 22 may receive other information 42 from other elevator system components that may indicate other system states or system errors. Based on all the information available, the microprocessor 22 determines whether or not to perform a learn run. If a learn run is possible, the microprocessor 22 proceeds to generate a suitable PWM drive signal 30 to control the elevator door motor 15 so as to determine the extent of the door opening and store calibration values that can be used during normal operation of the elevator system. The PWM drive signal 30 has a frequency of no more than 10 Hz and thus is below the normal audible range for humans. Additionally, the PWM switching frequency is typically between 10 kHz and 20 kHz and thus is higher than the normal audible range for humans so as to reduce the audible noise of the elevator door motor 15 for a more pleasant user experience. If a learn run is not possible, e.g. because the TCI switch 40 is not in the inspection mode position, or because the other information 42 indicates that a learn run is not possible, the microprocessor instead generates an acoustic frequency PWM signal 32.

The acoustic frequency PWM signal 32 has a frequency in the audible range of humans. More particularly, the acoustic frequency PWM signal 32 excites vibrations in the elevator door motor 15 due to the magnetic forces on the motor windings that create audible noise that the maintenance worker can hear and thereby determine that the learn run button 21 was successfully pressed but that there is a problem that requires attention before a learn run can be completed. The maintenance worker will therefore not waste time trying the learn run button 21 again or trying to press it harder in the belief that it did not make contact. The best frequency or frequencies to use in the acoustic frequency PWM signal 32 will depend to some extent on the particular motor design and therefore may vary from one system to another. However, as the frequency is selected based solely on software, it is easy to program or reprogram the microprocessor 22 for a particular system. To provide one example of this utility, in the case of an elevator door motor 15 needing replacement, a new model of elevator door motor 15 can be installed with different characteristics which may make it desirable to adjust the frequency or frequencies of the acoustic frequency PWM signal 32. However, this can readily be accommodated by reprogramming the microprocessor 22 without needing to install a whole new elevator door controller 20. This is cost efficient and time efficient.

The frequency or frequencies of the acoustic frequency PWM signal 32 are higher than the frequency or frequencies of the PWM drive signal 30 and in the audible range for humans, e.g. typically greater than 20 Hz, more preferably at least 50 Hz or at least 100 Hz or at least 500 Hz. The acoustic frequency PWM signal 32 is also no more than 10 kHz. For a pleasant and easy to hear tone that is in the optimum hearing range for a maintenance worker in an elevator shaft, the frequency or frequencies of the acoustic frequency PWM signal 32 may be in the range of 500 Hz to 1000 Hz.

Fig. 2 shows an example of one possible acoustic frequency PWM signal 32. The top line of Fig. 2 shows the contact that is made by the learn run button 21 (i.e. indicating that the button 21 is successfully pressed). The middle line of Fig. 2 shows the output Upwm of the PWM module 27 that is supplied to the elevator door motor 15. The signal Upwm is made up of two successive iterations 50, 51 of an audible frequency PWM signal (e.g. a 500 Hz signal). The bottom line of Fig. 2 shows the output noise that can be heard from the elevator door motor 15 which takes the form of a first beep 60 corresponding to the first iteration 50 of the PWM signal Upwm and a second beep 61 that corresponds to the second iteration 51 of the PWM signal Upwm. In this case, the use of a double beep can be used to indicate that the TCI switch 40 is not in the inspection mode. Thus the maintenance worker can immediately tell that a simple procedure is required to put the TCI switch 40 into the inspection mode so that the learn run can be initiated. Other signals such as a single beep, a triple beep or a longer beep may be used to indicate other problems in the system if desired. Alternatively, a more complex acoustic frequency PWM signal 32 may generate synthesised speech from the elevator door motor 15 instead of one or more beeps.

## Claims

1. An elevator door drive (10) comprising:
an elevator door motor (15); and
an elevator door controller (22) comprising at least one button (21);
wherein the elevator door controller (20) is arranged to generate a PWM drive signal (30) for driving the elevator door motor (15);
wherein the elevator door controller (20) is arranged to provide an acoustic frequency PWM signal (32) to the elevator door motor (15) responsive to a press of the at least one button (21).

2. An elevator door drive (10) as claimed in claim 1, wherein the elevator door controller (20) is arranged to provide the acoustic frequency PWM signal (32) in the case of an error.

3. An elevator door drive (10) as claimed in claim 1 or 2, wherein the frequency of the acoustic frequency PWM signal (32) is higher than that of the PWM drive signal (30).

4. An elevator door drive (10) as claimed in claim 1, 2 or 3, wherein the acoustic frequency PWM signal (32) comprises a frequency of no more than 10 kHz, optionally no more than 5 kHz, optionally no more than 3 kHz, optionally no more than 1500 Hz, optionally no more than 1000 Hz.

5. An elevator door drive (10) as claimed in any preceding claim, wherein the acoustic frequency PWM signal (32) comprises a frequency of at least 200 Hz.

6. An elevator door drive (10) as claimed in any preceding claim, wherein the PWM drive signal (30) comprises a frequency lower than 20 Hz, optionally lower than 10 Hz.

7. An elevator door drive (10) as claimed in any preceding claim, wherein the acoustic frequency PWM signal (32) has a power of no more than 10 Watts, optionally no more than 5 Watts, optionally no more than 2 Watts.

8. An elevator door drive (10) as claimed in any preceding claim, wherein the acoustic frequency PWM signal (32) comprises a plurality of acoustic frequencies.

9. An elevator door drive (10) is claimed in claim 8, wherein the acoustic frequency PWM signal (32) comprises synthesised speech.

10. An elevator door drive (10) as claimed in any preceding claim, wherein the at least one button (21) is a surface mount device button.

11. An elevator door drive (10) as claimed in any preceding claim, wherein the at least one button (21) provides no haptic feedback upon being pressed.

12. An elevator door drive (10) as claimed in any preceding claim, wherein the at least one button (21) comprises a door learn run button.

13. An elevator door drive (10) as claimed in any preceding claim, wherein the elevator door controller (20) is arranged to provide at least two different acoustic frequency PWM signals (32) to the elevator door motor (15), the at least two different acoustic frequency PWM signals (32) indicating different system states.

14. A method of operating an elevator door drive (10), comprising:
responsive to a press of at least one button (21) on an elevator door controller (20), generating an acoustic frequency PWM signal (32) and providing said acoustic frequency PWM signal (32) to an elevator door motor (15).

15. A method of upgrading an elevator door drive (10), comprising:
upgrading the software in an elevator door controller (20) of the elevator door drive (10) such that the elevator door controller (20) is arranged to provide an acoustic frequency PWM signal (32) to the elevator door motor (15) responsive to a press of at least one button (21) on the elevator door controller (20).
